# EUROPÄISCHE PATENTANMELDUNG

(11) **EP 1 151 782 A1**
(43) Veröffentlichungstag der Anmeldung: **07.11.2001**
(21) Anmeldenummer: 01110408.0
(22) Anmeldetag: 27.04.2001
(51) Int. Cl.: B01D 29/15, B01D 29/92

(54) **Filterkerze**

(30) Priorität: 06.05.2000 DE 10022171
(71) Anmelder: Seitz-Schenk Filtersystems GmbH, 55543 Bad Kreuznach (DE)
(72) Erfinder: Diemer, Wolfgang, 73550 Waldstetten (DE); Kuhnt, Rainer, 73529 Schwäbisch Gmünd-Strassdorf (DE); Gottkehaskamp, Ludger, 73571 Göggingen (DE); Lang, Hubert, 73540 Heubach (DE)
(74) Vertreter: Riedel, Peter

(57) **Zusammenfassung**

Die Erfindung betrifft eine Filteranordnung sowie eine Filterkerze (9) für eine Filteranordnung mit einem Filterkessel, dessen Innenraum durch eine Trennwand (4) in einen Filtratraum (5) und in einen Unfiltratraum (6) aufgeteilt ist. Die Trennwand (4) weist Strömungsöffnungen (7) zur Durchleitung filtrierter Flüssigkeiten (8) auf. Im Bereich der Strömungsöffnungen (7) sind Filterkerzen (9) befestigt, deren Kerzenraum (11) von einem Filterrohr (10) umschlossen ist. Im Kerzenraum (11) ist ein das Volumen des Kerzenraums (11) teilweise ausfüllender Verdrängungskörper (12) angeordnet. Zwischen der Oberfläche (14) des Verdrängungskörpers (12) und dem Filterrohr (10) ist mindestens ein Strömungskanal (46) gebildet.

## Beschreibung

Die Erfindung betrifft eine Filteranordnung mit den Merkmalen nach dem Oberbegriff des Anspruchs 1 und eine Filterkerze mit den Merkmalen nach dem Oberbegriff des Anspruchs 2.

Bekannte Filteranordnungen mit Filterkerzen bestehen üblicherweise aus einem Filterkessel, dessen Innenraum durch eine Trennwand in einen Filtratraum und in einen Unfiltratraum aufgeteilt ist. Dabei weist die Trennwand eine Vielzahl von Strömungsöffnungen auf, in deren Bereich je eine Filterkerze angeordnet ist. Eine zu filtrierende Flüssigkeit wie beispielsweise Bier, Fruchtsaft oder dgl. wird dabei durch eine Zulaufleitung in den Unfiltratraum und von dort durch die Filterkerzen und die Strömungsöffnungen in der Trennwand in den Filtratraum gepumpt. Die filtrierte Flüssigkeit wird über eine Ablaufleitung aus dem Filtratraum entnommen. Die Filterkerzen sind dabei üblicherweise stabförmig mit einem kreisrunden Querschnitt ausgebildet. Ihre Außenkontur wird durch ein Filterrohr aus einem Metallsieb, einem abgestützten Filtergewebe oder -vlies, aus Sintermaterial oder dgl. gebildet. Das Filterrohr umschließt einen Kerzenraum, der über die jeweilige Strömungsöffnung mit dem Filtratraum strömungsleitend verbunden ist. Anordnungen dieser Art werden sowohl für die sogenannte Anschwemmfiltration als auch für eine direkt einen Kuchen bildende Filtration eingesetzt. Bei der Anschwemmfiltration wird eine Flüssigkeit mit einem Filterhilfsmittel durch die Filteranordnung gepumpt, wobei sich die Filterhilfsmittel am Filterrohr absetzen. Anschließend wir die eigentliche zu filtrierende Flüssigkeit durch diese Anlage gepumpt, wobei Fest- und Trubstoffe an dem Filterhilfsmittel zurückgehalten werden, während die gereinigte Flüssigkeit durch das Filterhilfsmittel und das Filterrohr in den Kerzenraum und von dort durch die Strömungsöffnungen in den Filtratraum gelangt. Bei der direkt einen Kuchen bildenden Filtration werden die Schweb- und Trubstoffe direkt am Filterrohr zurückgehalten, wobei sie während des Filtrierprozesses eine Ablagerungsschicht zunehmender Dicke, den sogenannten Filterkuchen, bilden.

Bei Erreichen einer gewissen Filterkuchendicke ist eine Reinigung der Filteranordnung erforderlich. Dazu wird im Rückspülverfahren eine Reinigungsflüssigkeit in umgekehrter Richtung durch die Filterkerzen gepumpt, wobei sich der Filterkuchen von dem Filterrohr ablöst und zusammen mit der Spülflüssigkeit aus dem Unfiltratraum entnommen werden kann. Eine weitere Möglichkeit der Reinigung besteht in der Trocknung des Filterkuchens und anschließendem Abblasen desselben mittels in den Kerzenraum eingebrachter Druckgas.

Ein wesentlicher Nachteil von Filteranordnungen dieser Art besteht darin, daß zum Zeitpunkt der Beendigung des Filtriervorganges und vor Beginn des Reinigungsvorganges der Kerzenraum mit dem filtriertem Flüssigkeitsprodukt gefüllt ist, welches von dort für den weiteren Produktions- oder Abfüllprozeß nicht entnommen werden kann. Beim Rückspülen wird also zunächst die entsprechende Produktmenge durch das Filterrohr zurück in den Unfiltratraum gedrückt, wobei es sich mit der nachströmenden Spülflüssigkeit vermischt und als Produkt verlorengeht. Umgekehrt wird beim Wiederaufnehmen des Filtriervorganges zunächst in einem für die Produktion nicht verwertbaren Vorlaufprozeß die im Kerzenraum befindliche Spülflüssigkeit durch filtrierte Flüssigkeit verdrängt. Auch diese Vorlaufmenge geht als verwertbares Produkt verloren.

Ein weiterer Nachteil von Filteranordnungen der oben beschriebenen Art besteht darin, daß nicht alle im Flüssigkeitsstrom mitgeführten Partikel am Filterrohr zurückbehalten werden. Die anteilige, in den Kerzenraum gelangende Menge von Trubstoffen neigt dazu, sich im Kerzenraum abzulagern und mit zunehmender Ablagerungsdicke den effektiven Filterquerschnitt zu verkleinern. Die genannte Ablagerung ist durch einen Rückspülvorgang nicht oder nur unzureichend entfernbar. Wegen der langgestreckten, stabförmigen Bauform der Filterkerzen sind diese, wenn überhaupt, nur sehr schwer innenseitig zu reinigen und müssen ggf. ersetzt werden.

Ein weiterer Nachteil folgt aus der durch die Durchströmung des Filterrohres entstehenden Druckdifferenz, in deren Folge aufwendige Halte- und Stützvorrichtungen für das Filterrohr bereitgestellt sein müssen.

Der Erfindung liegt die Aufgabe zugrunde, eine gattungsgemäße Filteranordnung in ihrer Wirtschaftlichkeit zu verbessern.

Diese Aufgabe wird durch eine Filteranlage mit den Merkmalen des Anspruchs 1 gelöst.

Der Erfindung liegt des weiteren die Aufgabe zugrunde, eine gattungsgemäße Filterkerze derart weiterzubilden, daß mit dieser die Wirtschaftlichkeit der Filteranlage verbessert ist.

Diese Aufgabe wird durch eine Filterkerze mit den Merkmalen des Anspruchs 2 gelöst.

Durch Anordnung eines Verdrängungskörpers im Kerzenraum, der diesen größtenteils ausfüllt, wird das Flüssigkeitsvolumen im Kerzenraum substantiell verringert, ohne das Filterrohr selbst zu verkleinern und damit die Wirksamkeit des Kerzenfilters zu verringern. Die bei jedem Wechsel zwischen einem Filtrier- und Spülvorgang und umgekehrt im Kerzenraum verbleibende Flüssigkeitsrestmenge wird dadurch erheblich verringert, womit auch eine deutliche Verringerung von Produktverlusten durch das Entstehen von Verschnittmengen aus Filtriergut und Spülflüssigkeit einhergeht. Durch die Ausbildung eines Strömungskanals zwischen der Oberfläche des Verdrängungskörpers und dem Filterrohr, beispielsweise in Form eines Ringraumes, in Verbindung mit dem verringerten Flüssigkeitsvolumen darin bei gleichbleibender Filterrohrfläche und Flüssigkeitsdurchsatz, folgt des weiteren eine erheblich vergrößerte Strömungsgeschwindigkeit innerhalb des Kerzenraumes im Vergleich zu bekannten Filterkerzen. Diese erhöhte Strömungsgeschwindigkeit verhindert zuverlässig die Bildung von Ablagerungen feinster Trubstoffe oder dgl., die durch das Filterrohr in den Kerzenraum gelangt sind. Durch das Ausbleiben von Ablagerungen steht sowohl während des Filtrier- als auch des Rückspülvorganges immer die volle Filterfläche mit entsprechend hohem Wirkungsgrad zur Verfügung. Die Wartungsintervalle bzw. die Lebensdauer derart gestalteter Kerzenfilter wird verlängert, was ihre Wirtschaftlichkeit erheblich verbessert. Dabei hat sich ein Verdrängungsvolumen des Verdrängungskörpers von mindestens etwa 50% und bevorzugt ca. 90% des Volumens des Kerzenraumes als zweckmäßig herausgstellt.

In einer vorteilhaften Ausbildung ist der Verdrängungskörper massiv und insbesondere aus Kunststoff ausgebildet. Daraus ergibt sich die Möglichkeit, einen Verdrängungskörper mit komplexer Formgebung und hoher mechanischer Belastbarkeit vergleichsweise preisgünstig beispielsweise auf dem Wege des Spritzgießens herzustellen. In einer weiteren vorteilhaften Ausgestaltung der Erfindung ist der Verdrängungskörper aus einem abgeschlossenen Rohr gebildet. Als Werkstoffe für das Rohr sind Metalle und insbesondere Edelstahl sowie Kunststoffe zweckmäßig. Aus der Rohrform folgt eine hohe mechanische Belastbarkeit bei gleichzeitig geringem Gewicht. Der Einsatz von Edelstahl bringt neben hoher Materialfestigkeit eine gute chemische Beständigkeit, was insbesondere in der Lebensmitteltechnik und beim Filtrieren von aggressiven chemischen Gütern von Bedeutung ist.

Zweckmäßigerweise weist der Verdrängungskörper an seiner Oberfläche mindestens eine Strömungsrinne auf, wobei es sich um mehrere parallel zur Längsachse des Verdrängungskörpers ausgerichtete oder spiralig nach Art eines mehrgängigen Gewindes um den Verdrängungskörper verlaufende Rinnen handeln kann. Insbesondere ist eine Strömungsrinne vorgesehen, die wendelförmig vergleichbar zu einem eingängigen Gewinde um den Verdrängungskörper verläuft, wodurch eine definierte Strömung des filtrierten Produktes gegeben ist, was zur zuverlässigen Vermeidung von Ablagerungen beiträgt. Dabei kann es vorteilhaft sein, den Strömungsquerschnitt der Strömungsrinne oder der Strömungsrinnen in Durchströmungsrichtung sich erweiternd zu gestalten. Durch den sich erweiternden Querschnitt in Verbindung mit dem stetigen Zulauf von filtrierter Flüssigkeit durch die gesamte Oberfläche des Filterrohres kann die Strömungsgeschwindigkeit in der Strömungsrinne über ihre gesamte Länge mindestens näherungsweise konstant gehalten werden. Dadurch ist vermieden, daß insbesondere im Bereich des von der Trennwand abgewandten Endes der Filterkerze die Strömungsgeschwindigkeit unter einem gewünschten Mindestmaß liegt.

Ein weiterer Vorteil der Erfindung liegt darin, daß der Verdrängungskörper mit seiner geometrisch bedingten hohen Tragfähigkeit als Stützkörper für die gesamte Filterkerze dienen kann. Insbesondere durch Abstützung des Filterrohres an den Rändern der Strömungsrinne ist das Filterrohr gegen die anliegende, von außen in Richtung des Kerzenraumes wirkende Druckdifferenz beim Filtriervorgang zuverlässig abgestützt. Diese Ausbildung erlaubt den Einsatz verschiedenster Filtermaterialien für das Filterrohr wie Metallgewebe, Sintervlies oder -gewebe, Keramik oder auch ein mit Tuchoder Nadelfilz bespanntes Rohrgitter. Dabei kann angepaßt an die entsprechende Filtrieraufgabe ein entsprechendes Filterrohr auf einen standardisierten Verdrängungskörper aufgeschoben werden.

Die Strömungsrinne selbst kann abhängig von der jeweiligen Aufgabenstellung auf verschiedene Weise ausgebildet sein. Es kann vorteilhaft sein, beispielsweise einen Kunststoffverdrängungskörper einteilig mit auf seiner Oberfläche angeordneten parallelen Rippen oder einer einzelnen, wendelförmig um seine Oberfläche umlaufenden Rippe auszubilden, wobei die Rippe bzw. die Rippen die Ränder der Strömungsrinne bilden. Insbesondere im Zusammenhang mit einem als metallenes Rohr ausgebildeten Verdrängungskörper kann es zweckmäßig sein, die Rippe oder die Rippen als ein an der Oberfläche des Verdrängungskörpers beispielsweise auf dem Wege des Schweißens befestigter Draht auszubilden. Die Möglichkeit einer weiteren vorteilhaften Ausbildung besteht in einer wellenförmigen Ausprägung der Oberfläche des Verdrängungskörpers, wobei die Wellentäler die Strömungsrinne und die Wellenberge deren Ränder bilden. Ein derart ausgebildeter Verdrängungskörper ist mit einfachen fertigungstechnischen Mitteln, beispielsweise durch Einsatz eines Wellrohres mit achsparallelen oder wendelförmig umlaufenden Wellen, herstellbar.

In einer weiteren bevorzugten Ausbildung der Erfindung ist der Verdrängungskörper länger als das ihn umschließende Filterrohr derart ausgebildet, daß ein Ende des Verdrängungskörpers in axialer Richtung aus dem Filterrohr herausragt und vom Unfiltratraum aus durch die Strömungsöffnungen in der Trennwand hindurch in den Filtratraum hindurchsteckbar ist. Dabei sind an seinem filtratraumseitigen Ende Befestigungsmittel zur Befestigung der Filterkerze vorgesehen. Je nach Anwendungsfall kann es zweckmäßig sein, daß diese Befestigungsmittel einen durch eine Keilöffnung im Verdrängungskörper hindurchsteckbaren Keil, einen Bajonettoder Bügelverschluß umfassen. Insbesondere bei einer wendelförmigen Ausbildung der Strömungsrinne ist die Anordnung einer Rohrmutter vorteilhaft, die in die wendelförmige Strömungsrinne eingreift. Dadurch übernimmt der Verdrängungskörper neben der weiter oben beschriebenen Stützfunktion für das Filterrohr auch die Funktion der mechanischen Anbindung der Filterkerze an die Trennwand. Das Filterrohr selbst ist also nur geringfügig belastet und kann entsprechend konstruktiv einfach gestaltet sein. Insbesondere kann auf kostenintensiv an das Filterrohr angeschweißte Verstärkungsringe oder dgl. verzichtet werden. Auch ergibt sich daraus die Möglichkeit, das Filterrohr vom Verdrängungskörper abnehmbar zu gestalten, wodurch es in einfacher Weise auswechselbar ist. Dabei weist der Verdrängungskörper zweckmäßig an seinem der Trennwand abgewandten Ende einen Absatz auf, zwischen dem und der Trennwand das Filterrohr mittels je einer Dichtung gehalten ist. Dies erlaubt eine einfache Auswechselbarkeit des Filterrohrs in Verbindung mit einer zuverlässigen und dichten Festlegung desselben.

Durch Anordnung je einer Haltebuchse in den Strömungsöffnungen der Trennwand ergibt sich die Möglichkeit eines sogenannten "Obeneinbaus". Indem der Außendurchmesser der Haltebuchse mindestens so groß ist wie der größte Durchmesser der Filterkerze im Bereich des Unfiltratraumes, kann die Filterkerze in die Haltebuchse montiert werden und anschließend gemeinsam mit dieser als Einheit vom Filtratraum aus durch die Strömungsöffnung in den Unfiltratraum eingeführt werden. Daraus ergibt sich der Vorteil, daß zum Auswechseln der Filterkerzen der Filterkessel nur auf seiner Filtratraumseite geöffnet werden muß, was den Aufwand des Auswechselns erheblich verringert.

Zweckmäßig weisen die Befestigungsmittel für die Filterkerzen im Bereich der Trennwand Spülöffnungen auf. Beim Rückspülvorgang kann dadurch in den Filtratraum zunächst eine verhältnismäßig geringe Menge Spülflüssigkeit eingeleitet werden. Anschließend wird der Kerzenraum von innen nach außen mit einem Gas durchblasen, wobei das strömende Gas die Spülflüssigkeit durch die Spülöffnungen ansaugt und ein Aerosol bildet. Dadurch ist mit einer geringen Menge von Spülflüssigkeit eine hohe Reinigungswirkung erzielbar.

Ausführungsbeispiele der Erfindung werden im folgenden anhand der Zeichnung näher erläutert. Es zeigen:

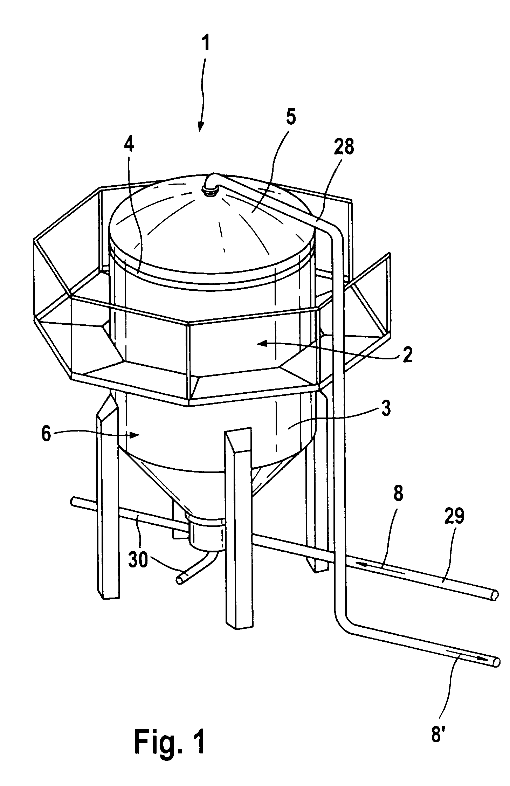

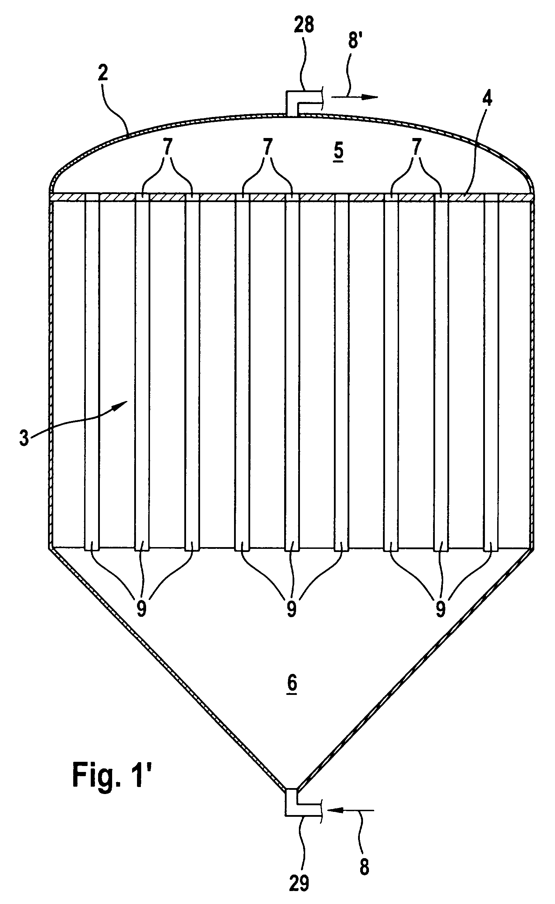

- Fig. 1: in perspektivischer Darstellung eine Übersicht einer Filteranordnung;
- Fig. 1': einen schematisch dargestellten Längsschnitt durch einen Filterkessel;
- Fig. 2: einen Längsschnitt durch eine Filterkerze aus einer Filteranordnung nach Fig. 1 mit einem massiven Verdrängungskörper;
- Fig. 3: eine Variante der Filterkerze nach Fig. 2 mit einem rohrförmigen Verdrängungskörper und einer Drahtwendel;
- Fig. 4: in einer Schnittdarstellung eine Ausführungsvariante eines Verdrängungskörpers nach Fig. 2 mit einer einteilig angeformten, umlaufenden Rippe;
- Fig. 5: eine weitere Variante eines Verdrängungskörpers in Form eines Wellrohres;
- Fig. 6: in einer Schnittdarstellung eine mit einer Haltebuchse befestigte Filterkerze für den "Obeneinbau";
- Fig. 7: Einzelheiten einer Keilbefestigung für Filterkerzen;
- Fig. 8: eine weitere Variante einer Filterkerzenbefestigung mit einem Bajonettverschluß.

Die in den Fig. 1 und 1' gezeigte Filteranordnung 1 besteht im wesentlichen aus einem Filterkessel 2, dessen Innenraum 3 im oberen Bereich durch eine Trennwand 4 in einen oberen Filtratraum 5 und einen unteren Unfiltratraum 6 aufgeteilt ist. Während des Filtriervorganges wird ein zu filtrierendes flüssiges Unfiltrat 8 über die Zulaufleitung 29 in den Unfiltratraum 6 gepumpt. Von dort gelangt das Unfiltrat 8 durch weiter unten näher beschriebenen Filterkerzen 9 und Strömungsöffnungen 7 in der Trennwand 4 in den Filtratraum 5, wobei das Unfiltrat 8 beim Passieren der Filterkerzen 9 von mitgeführten Schwebepartikeln oder dgl. gereinigt wird. Die gereinigte Flüssigkeit 8' wird über die Ablaufleitung 28 entnommen und dem weiteren Produktionsprozess oder der Abfüllung zugeführt. Zum Reinigen der Filterkerzen 9 im Rückspülverfahren wird eine Reinigungsflüssigkeit in umgekehrter Richtung durch die Ablaufleitung 28 in den Filtratraum 5 und von dort durch die Strömungsöffnungen 7 und die Filterkerzen 9 in den Unfiltratraum 6 gepumpt. Dabei löst sich der zuvor gebildete Filterkuchen von den Filterkerzen 9 und kann zusammen mit der Spülflüssigkeit durch verschiedene Drainageeinrichtungen 30 entnommen werden.

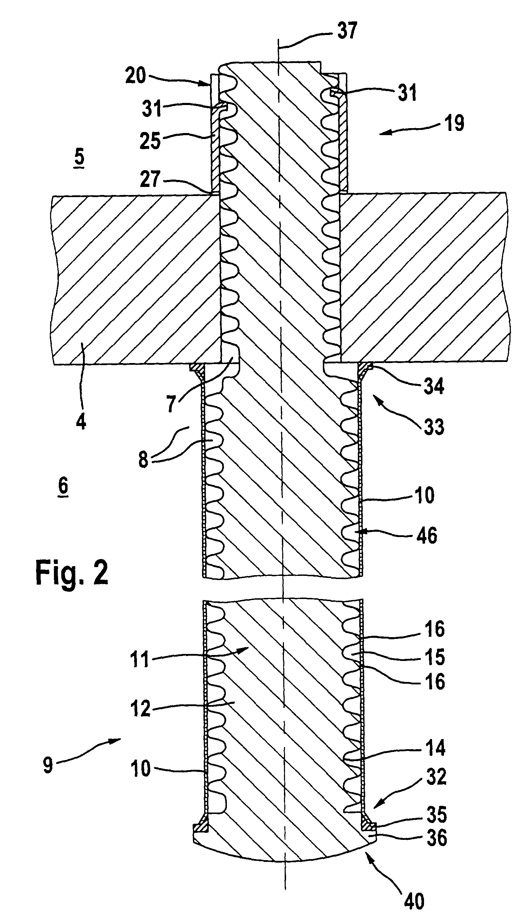

Fig. 2 zeigt in einer Querschnittsdarstellung ein Ausführungsbeispiel einer erfindungsgemäßen Filterkerze 9, bei der sich ein zylindrisches flüssigkeitsdurchlässiges Filterrohr 10 entlang einer Längsachse 37 erstreckt und einen Kerzenraum 11 umschließt. Der Kerzenraum 11 ist zu etwa 90% durch einen massiven Verdrängungskörper 12 aus spritzgegossenem Kunststoff ausgefüllt. Das Filterrohr 10 ist lösbar am Verdrängungskörper 12 gehalten, in dem der Verdrängungskörper 12 an seinem unteren Ende 40 einen Absatz 36 aufweist, an dem mit einer zwischengelegten Dichtung 35 das Filterrohr 10 dichtend anliegt. Am oberen Ende 33 des Filterrohres 10 ist ebenfalls eine Dichtung 34 vorgesehen, die an der Trennwand 4 anliegt und das Filterrohr 10 gegen diese abdichtet. Die Filterkerze 9 ist in einer Strömungsöffnung 7 der Trennwand 4 befestigt, in dem am filtratraumseitigen Ende 19 des Verdrängungskörpers 12 Befestigungsmittel 20 in Form einer Rohrmutter 25 vorgesehen sind. Zwischen der Oberfläche 14 des Verdrängungskörpers 12 und dem Filterrohr 10 ist ein Strömungskanal 46 gebildet, in dem der Verdrängungskörper 12 an seiner Oberfläche 14 eine wendelförmig umlaufende Strömungsrinne 15 aufweist, die sich vom unteren Ende 32 des Verdrängungskörpers 12 durch die Strömungsöffnung 7 bis zu seinem filtratraumseitigen Ende 19 erstreckt. Dadurch und durch das flüssigkeitsdurchlässige Filterrohr 10 ist eine strömungsleitende Verbindung vom Unfiltratraum 6 zu dem durch die Trennwand 4 abgetrennten Filtratraum 5 gegeben. Der Verdrängungskörper 12 kann auch in Form eines glatten Zylinders ausgebildet sein, wobei zwischen dessen Oberfläche 14 und dem Filterrohr 10 ein Strömungskanal 46 in Form eines Ringraumes verbleibt.

Am filtratraumseitigen Ende 19 des Verdrängungskörpers 12 wirkt die wendelförmige Strömungsrinne 15 auch als Gewinde für die Rohrmutter 25, deren nach innen gebogene Laschen 31 in die Strömungsrinne 15 eingreifen. Die Strömungsrinne 15 ist entlang der Längsachse 37 von gleichbleibendem Querschnitt, kann aber auch einen vom unteren Ende 32 in Richtung des filtratraumseitigen Endes 19 sich erweiternd ausgebildet sein. Die Strömungsrinne 15 ist von Rändern 16 begrenzt, auf denen das Filterrohr 10 abgestützt anliegt. In der gezeigten Anordnung ist die Filterkerze 9 nur im Bereich der Strömungsöffnung 7 gehalten, während die Filterkerze 9 im Bereich des Absatzes 36 keinerlei Stützung aufweist. Die Filterkerze 9 kann durch Lösen der Rohrmutter 25 in Richtung des Unfiltratraumes 6 aus der Strömungsöffnung 7 herausgenommen werden, wonach dann auch das lose auf den Verdrängungskörper 12 aufgeschobene Filterrohr 10 abziehbar und austauschbar ist.

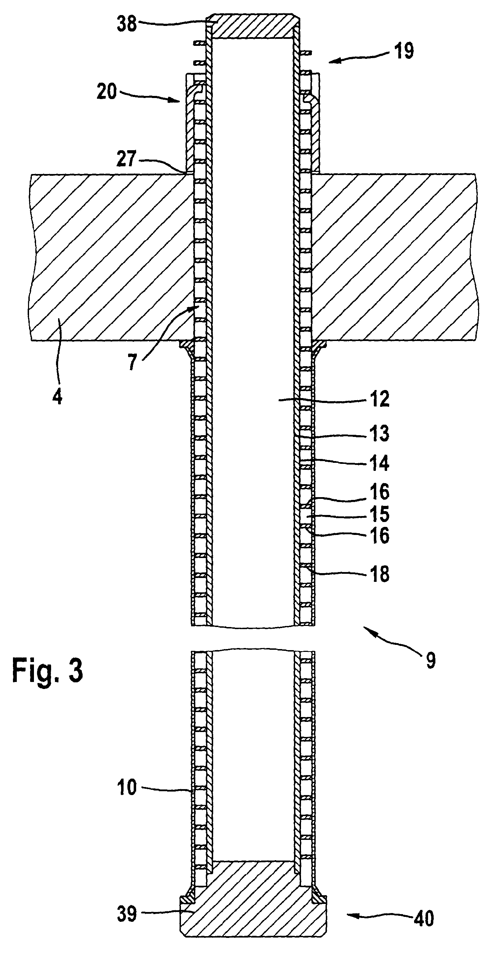

Bei der in Fig. 3 gezeigten Variante der Filterkerze 9 ist der Verdrängungskörper 12 aus einem Metallrohr 13 gebildet, welches an seinen beiden Enden 19, 40 durch einen Deckel 38 bzw. einen Boden 39 abgeschlossen ist. Eine wendelförmige Strömungsrinne 15 mit ihren Rändern 16 ist durch einen hochkant auf die Oberfläche 14 des Rohres 13 aufgeschweißten, wendelförmig verlaufenden Draht 18 mit flachem Querschnitt gebildet. Das Rohr 13 kann auch aus Kunststoff gefertigt sein.

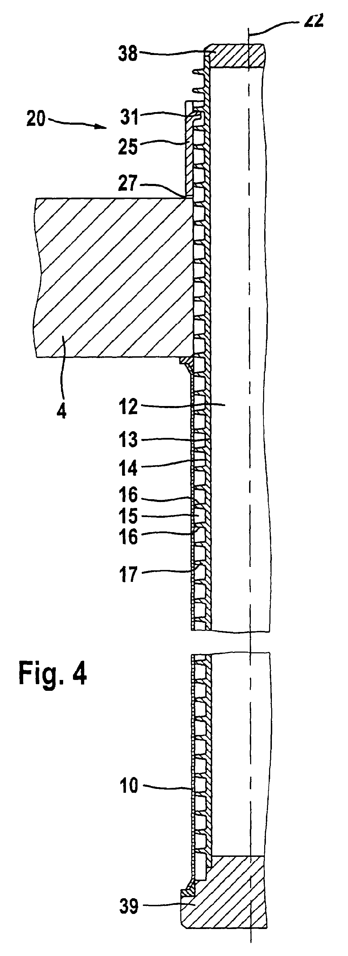

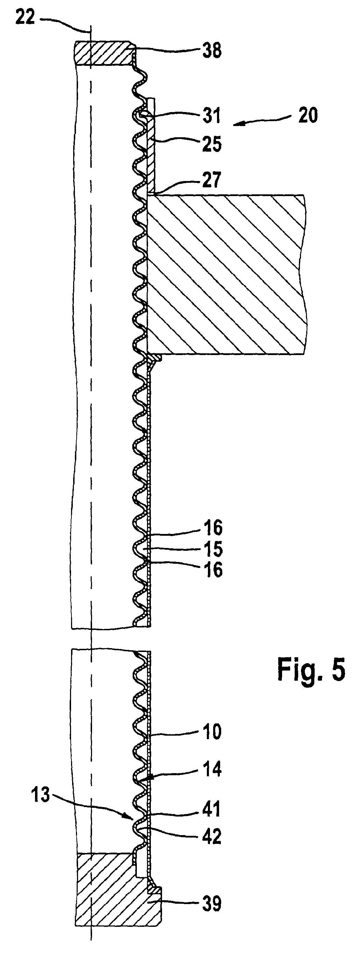

Eine weitere Variante ist in Fig. 4 gezeigt, wobei der Verdrängungskörper 12 als Rohr 13 ausgebildet ist mit einer wendelförmigen, sich radial zur Oberfläche 14 erhebenden Rippe 17, die die Strömungsrinne 15 mit ihren Rändern 16 bildet. Dabei ist der Steg 17 mit dem Rohr 13 einteilig durch spanende oder spanlose Formgebung oder gießtechnisch gebildet. In Fig. 5 ist eine weitere Variante gezeigt, bei der das Rohr 13 ein Wellrohr ist, dessen Wellenberge 41 und Wellentäler 42 die Strömungsrinne 15 und deren Ränder 16 bilden.

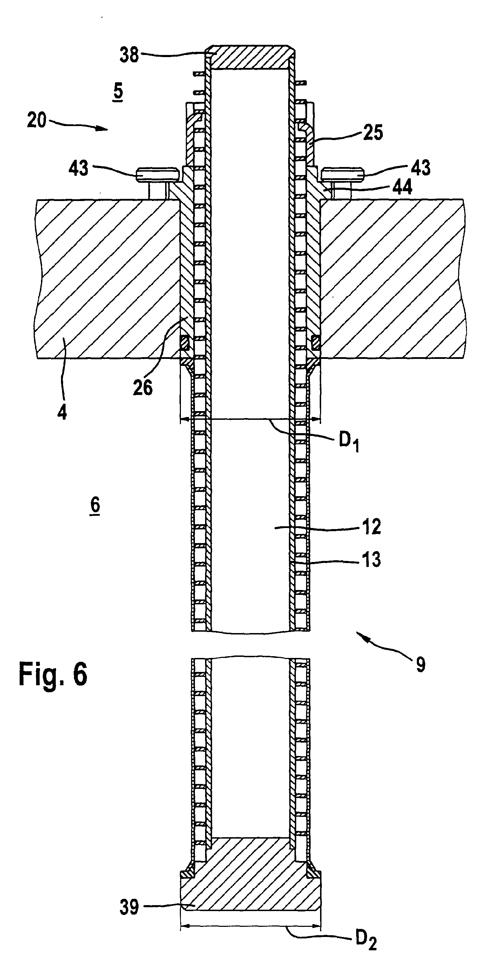

Fig. 6 zeigt eine Variante der Befestigungsmittel 20 für die Filterkerze 9, bei der der Verdrängungskörper 12 in einer Haltebuchse 26 durch eine aufgeschraubte Rohrmutter 25 gehalten ist. Die Einheit aus der Filterkerze 9 und der Haltebuchse 26 ist ihrerseits in der Strömungsöffnung 7 durch Arretierbolzen 43 gehalten, die einen umlaufenden, flanschförmigen Absatz 44 der Haltebuchse 26 übergreifen. Der Durchmesser D1 der Haltebuchse 26 ist im gezeigten Ausführungsbeispiel so groß wie der größte Durchmesser D2 der Filterkerze 9 im Bereich des Unfiltratraumes 6, kann aber auch größer als dieser sein. Durch diese Anordnung ist nach Lösen der Arretierbolzen 43 die Filterkerze 9 zusammen mit der Haltebuchse 26 in Richtung des Filtratraumes 5 aus der Trennwand 4 entnehmbar oder in umgekehrter Richtung einsteckbar.

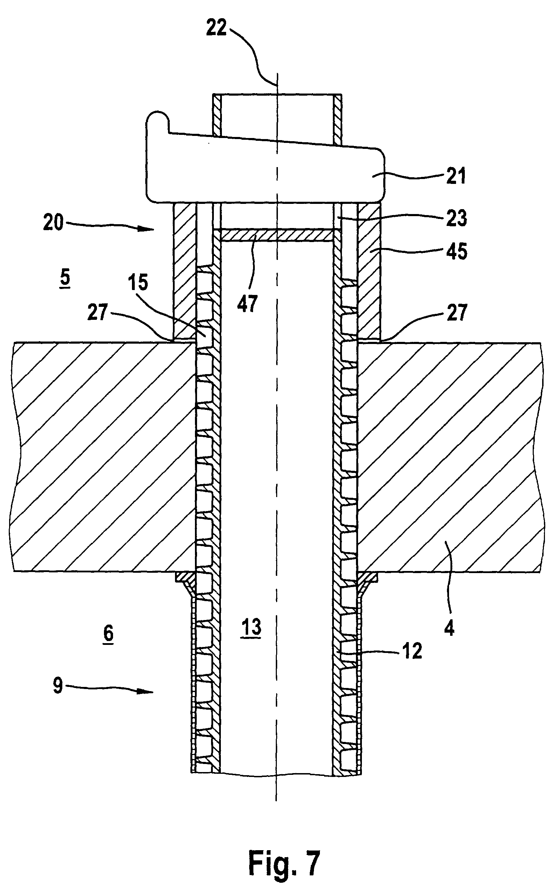

Anstelle der oben gezeigten Rohrmuttern können nach Fig. 7 auch Haltemittel 20 für die Filterkerze 9 vorgesehen sein, die einen Keil 21 umfassen, der quer zur Längsachse 22 durch eine Keilöffnung 23 im Verdrängungskörper 12 schiebbar ist. Der Keil 21 stützt sich dabei gegen eine Distanzhülse 45 ab, die ihrerseits gegen die Trennwand 4 abgestützt ist. Der als Rohr 13 ausgebildete Verdrängungskörper 12 ist im Bereich des Keils 21 durch einen Deckel 47 abgedichtet.

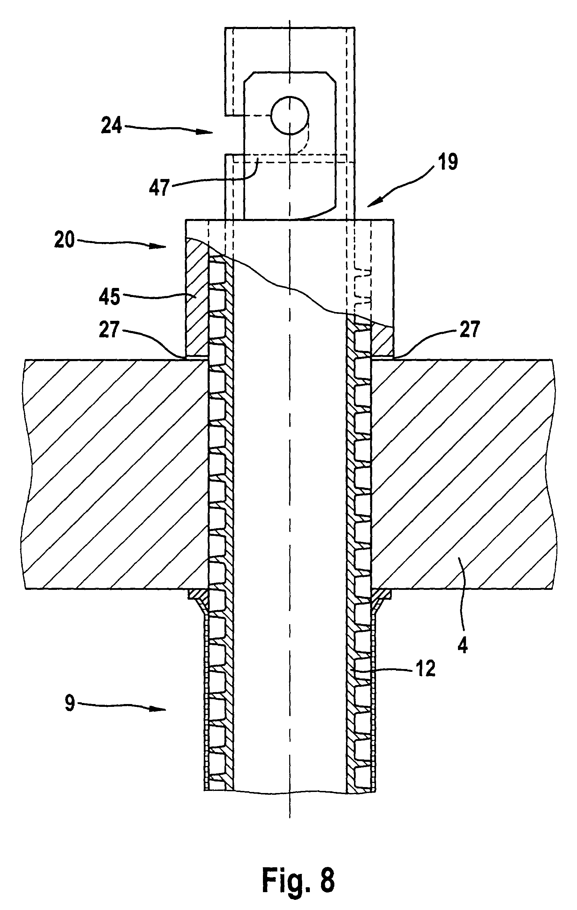

Eine weitere Ausbildung der Befestigungsmittel 20 für die Filterkerze 9 ist in Fig. 8 gezeigt, wobei am filtratraumseitigen Ende 19 des Verdrängungskörpers 12 ein Bügelverschluß 24 vorgesehen ist, der über eine Distanzhülse 45 gegen die Trennwand 4 abgestützt ist. Die in den Fig. 7 und 8 gezeigten Varianten der Befestigungsmittel 20 können auch in Kombination mit einer Haltebuchse 26 nach Fig. 6 eingesetzt sein.

Bei den in den Fig. 2 bis 5, 7 und 8 gezeigten Ausführungsbeispielen weisen die Befestigungsmittel 20 nahe der Trennwand 4 Spülöffnungen 27 auf, durch die eine strömungsleitende Verbindung zwischen der Strömungsrinne 15 und dem Filtratraum 5 gegeben ist. Entsprechende Spülöffnungen 27 können auch in der Haltebuchse 26 nach Fig. 6 vorgesehen sein.

Anstelle der oben gezeigten Ausbildungen der Verdrängungskörper 12 mit einer vergleichbar zu einem eingängigen Gewinde wendelförmig umlaufenden Strömungsrinne 15 können auch Anordnungen zweckmäßig sein, bei denen mehrere Strömungsrinnen 15 nach Art eines mehrgängigen Gewindes um den Verdrängungskörper 12 verlaufen. Auch ist eine erfindungsgemäße Ausführung möglich, bei denen der Verdrängungskörper 12 mehrere etwa parallel zu dessen Längsachse 22 verlaufende Strömungsrinnen 15 aufweist. Als Variante können diese zusätzlich noch von wendelförmig umlaufenden Strömungsrinnen umgeben sein, in dem beispielsweise auf die parallelen Rippen ein wendelförmig verlaufender Draht aufgewickelt ist.

## Patentansprüche

1. Filteranordnung (1) mit einem Filterkessel (2), dessen Innenraum (3) durch eine Trennwand (4) in einen Filtratraum (5) und in einen Unfiltratraum (6) aufgeteilt ist, wobei die Trennwand (4) Strömungsöffnungen (7) zur Durchleitung filtrierter Flüssigkeiten (8) aufweist und wobei an der Trennwand (4) im Bereich der Strömungsöffnungen (7) Filterkerzen (9) mit einem Filterrohr (10) und einem vom Filterrohr (10) umschlossenen Kerzenraum (11) befestigt sind,
**dadurch gekennzeichnet, daß** im Kerzenraum (11) ein das Volumen des Kerzenraums (11) teilweise ausfüllender Verdrängungskörper (12) angeordnet und zwischen der Oberfläche (14) des Verdrängungskörpers (12) und dem Filterrohr (10) mindestens ein Strömungskanal (46) gebildet ist.

2. Filterkerze für eine Filteranordnung (1) mit einem Filterkessel (2), dessen Innenraum (3) durch eine Trennwand (4) in einen Filtratraum (5) und in einen Unfiltratraum (6) aufgeteilt ist, wobei die Trennwand (4) Strömungsöffnungen (7) zur Durchleitung filtrierter Flüssigkeiten (8) aufweist und wobei an der Trennwand (4) im Bereich der Strömungsöffnungen (7) die Filterkerzen (9) mit einem Filterrohr (10) und einem vom Filterrohr (10) umschlossenen Kerzenraum (11) befestigt sind,
**dadurch gekennzeichnet, daß** im Kerzenraum (11) ein das Volumen des Kerzenraums (11) teilweise ausfüllender Verdrängungskörper (12) angeordnet und zwischen der Oberfläche (14) des Verdrängungskörpers (12) und dem Filterrohr (10) mindestens ein Strömungskanal (46) gebildet ist.

3. Filterkerze nach Anspruch 2,
**dadurch gekennzeichnet, daß** der Verdrängungskörper (12) massiv und insbesondere aus Kunststoff ist.

4. Filterkerze nach Anspruch 2,
**dadurch gekennzeichnet, daß** der Verdrängungskörper (12) ein geschlossenes Rohr (13), insbesondere aus Edelstahl oder Kunststoff ist.

5. Filterkerze nach einem der Ansprüche 2 bis 4,
**dadurch gekennzeichnet, daß** der Strömungskanal (46) als an der Oberfläche (14) des Verdrängungskörpers (12) verlaufende Strömungsrinne (15) ausgebildet ist.

6. Filterkerze nach Anspruch 5,
**dadurch gekennzeichnet, daß** die Strömungsrinne (15) und insbesondere mindestens zwei Strömungsrinnen (15) nach Art eines mehrgängigen Gewindes wendelförmig um den Verdrängungskörper (12) verlaufen.

7. Filterkerze nach Anspruch 5 oder 6,
**dadurch gekennzeichnet, daß** sich der Strömungsquerschnitt der Strömungsrinne (15) in Durchströmungsrichtung erweitert.

8. Filterkerze nach einem der Ansprüche 5 bis 7,
**dadurch gekennzeichnet, daß** das Filterrohr (10) an Rändern (16) der Strömungsrinne (15) abstützbar ist.

9. Filterkerze nach einem der Ansprüche 5 bis 8,
**dadurch gekennzeichnet, daß** die Strömungsrinne (15) durch die Oberfläche (14) des Verdrängungskörpers (12) und mindestens eine auf der Oberfläche (14) angeordnete, den Rand (16) der Strömungsrinne (15) bildende Rippe (17) gebildet ist und daß die Rippe (17) insbesondere ein an der Oberfläche befestigter Draht (18) ist.

10. Filterkerze nach einem der Ansprüche 5 bis 8,
**dadurch gekennzeichnet, daß** die Strömungsrinne (15) durch eine wellenförmig ausgeprägte Oberfläche (14) des Verdrängungskörpers (12) gebildet ist.

11. Filterkerze nach einem der Ansprüche 1 bis 10,
**dadurch gekennzeichnet, daß** das Filterrohr (10) lösbar am Verdrängungskörper (12) gehalten ist, wobei der Verdrängungskörper (12) zweckmäßig an seinem unfiltratraumseitigen Ende (40) einen Absatz (36) aufweist, und daß das Filterrohr (10) insbesondere an seinen beiden Enden (32, 33) zwischen dem Absatz (36) und der Trennwand (4) gehalten ist.

12. Filterkerze nach einem der Ansprüche 1 bis 11,
**dadurch gekennzeichnet, daß** das Verdrängungsvolumen des Verdrängungskörpers (12) etwa 50% bis 90% des Volumens des Kerzenraumes (11) beträgt.

13. Filterkerze nach einem der Ansprüche 1 bis 15,
**dadurch gekennzeichnet, daß** der Verdrängungskörper (12) vom Unfiltratraum (6) durch die Strömungsöffnung (7) hindurch in den Filtratraum (5) hineinragt und daß am filtratraumseitigen Ende (19) des Verdrängungskörpers (12) Befestigungsmittel (20) zur Befestigung der Filterkerze (9) vorgesehen sind, wobei insbesondere die Befestigungsmittel (20) einen Keil (21) umfassen, der quer zur Längsachse (22) des Verdrängungskörpers (12) durch eine Keilöffnung (23) im Verdrängungskörper (12) schiebbar ist, oder wobei die Befestigungsmittel (20) einen Bügelverschluß (24) umfassen, oder wobei die Befestigungsmittel (20) eine mit der wendelförmigen Strömungsrinne (15) im Eingriff stehende Rohrmutter (25) umfassen.

14. Filterkerze nach Anspruch 13,
**dadurch gekennzeichnet, daß** die Befestigungsmittel (20) im Bereich der Trennwand (4) Spülöffnungen (27) aufweisen.

15. Filterkerze nach einem der Ansprüche 1 bis 14,
**dadurch gekennzeichnet, daß** die Befestigungsmittel (20) eine filtratraumseitig in die Strömungsöffnung (7) einführbare, den Verdrängungskörper (12) haltende Haltebuchse (26) umfassen, wobei der Durchmesser (D1) der Haltebuchse (26) mindestens so groß ist wie der größte Durchmesser (D2) der Filterkerze (9) im Bereich des Unfiltratraumes (6).
